# EUROPÄISCHE PATENTSCHRIFT

(11) **EP 2 676 023 B1**
(45) Veröffentlichungstag und Bekanntmachung des Hinweises auf die Patenterteilung: **13.09.2017**
(21) Anmeldenummer: 12709052.0
(22) Anmeldetag: 08.03.2012
(51) Int. Cl.: F02C 7/18, F01D 5/18

(54) **VERFAHREN ZUM KÜHLEN DER TURBINENSTUFE EINER GASTURBINE**
PROCESS FOR COOLING THE TURBINE STAGE OF A GAS TURBINE
PROCÉDÉ DE REFROIDISSEMENT D'UN ÉTAGE DE TURBINE

(30) Priorität: 07.04.2011 EP 11161499
(43) Veröffentlichungstag der Anmeldung: 25.12.2013
(73) Patentinhaber: Siemens Aktiengesellschaft, 80333 München (DE)
(72) Erfinder: BOLMS, Hans-Thomas, 45481 Mülheim an der Ruhr (DE); DOBRZYNSKI, Boris, 13187 Berlin (DE)
(86) Internationale Anmeldenummer: PCT/EP2012/053971
(87) Internationale Veröffentlichungsnummer: WO 2012/136437

(56) Entgegenhaltungen:
- EP-A2- 1 921 292
- DE-A1- 19 604 416
- GB-A- 938 247
- GB-A- 1 338 354
- US-A- 3 385 509
- US-A- 4 767 259
- US-A1- 2004 040 309

## Beschreibung

Die Erfindung betrifft ein Verfahren zum Kühlen der Turbinenstufe einer Gasturbine, die eine von einem Kühlmedium gekühlt betreibbare Leitschaufel und eine Kühlmediumszuführeinrichtung zum Zuführen des Kühlmediums in das Innere der Leitschaufel aufweist. Eine Gasturbine ist beispielsweise in einem Kraftwerk zur Erzeugung von elektrischer Energie mit einem Generator gekuppelt und wird sowohl im Teillastbetrieb als auch im Volllastbetrieb bei derselben Drehzahl betrieben. Die Gasturbine weist einen Verdichter, eine Brennkammer und eine Turbine auf, wobei von dem Verdichter Umgebungsluft angesaugt und verdichtet wird, die in der Brennkammer unter Verbrennung eines Brennstoffs erhitzt wird. Die erhitzte und verdichtete Luft wird in der Turbine arbeitsleistend entspannt, wobei mit dem dadurch gewonnen Arbeitsüberschuss der Generator angetrieben wird. Herkömmlich ist die Turbine in Axialbauweise konstruiert, wobei Leitschaufelreihen und Laufschaufelreihen in Hauptströmungsrichtung sich abwechselnd und hintereinander angeordnet sind. Zur Erzielung eines möglichst hohen thermodynamischen Wirkungsgrads der Gasturbine ist es erstrebenswert, die Gasturbine bei einer möglichst hohen Turbineneintrittstemperatur zu fahren. Die maximal zulässige Turbineneinrittstemperatur ergibt sich aus der thermischen Belastbarkeit der Turbine, insbesondere der Leitschaufelreihen und der Laufschaufelreihen der Turbine.

Eine Steigerung der maximal zulässigen Turbineneintrittstemperatur ist dann möglich, wenn beispielsweise die erste Leitschaufelreihe unmittelbar hinter dem Brennkammeraustritt gekühlt wird. Zum Kühlen der Leitschaufelreihe ist es beispielsweise aus der GB 1 338 354 und GB 938 247 bekannt, die Leitschaufeln der Leitschaufelreihe hohl auszubilden und mit Kühlluft zu durchströmen, die beispielsweise von dem Verdichter entnommen wird.

Wird die Gasturbine im Teillastbetrieb gefahren, senken sich die Turbineneintrittstemperatur und das Gesamtdruckverhältnis der Gasturbine ab, verglichen mit dem Volllastbetrieb der Gasturbine, wodurch der thermodynamische Wirkungsgrad der Gasturbine im Teillastbetrieb nachteilig abgesenkt ist. Außerdem ist im Teillastbetrieb der Gasturbine der Gesamtmassenstrom der Hauptströmung durch die Gasturbine reduziert, wodurch sich nachteilig die relativen Zuströmwinkel der Turbinenlaufschaufeln, insbesondere der Turbinenlaufschaufeln der Laufschaufelreihe hinter der ersten Leitschaufelreihe, verglichen mit den Zuströmwinkeln im Auslegungszustand unterscheiden. Dies führt im Teillastbetrieb der Gasturbine zu einer Fehlanströmung der Turbinenlaufschaufeln, wodurch die Arbeitsumsetzung in den Turbinenlaufschaufeln nachteilig herabgesetzt ist. Ferner wird beim Teillastbetrieb der Gasturbine die Brennstoffzufuhr in die Brennkammer abgesenkt, wodurch die Flammtemperatur in der Gasturbine erniedrigt wird. Dadurch können in der Brennkammer nachteilige Verbrennungsinstabilitäten auftreten, die den Betrieb und die Verfügbarkeit der Gasturbine im Teillastbetrieb beeinträchtigen.

Wird die Gasturbine ausgehend vom Volllastbetrieb in den Teillastbetrieb gefahren, so senken sich die einzelnen Stufendruckverhältnisse und somit das Gesamtdruckverhältnis der Gasturbine ab und die Abgastemperatur steigt bei im Wesentlichen gleichbleibender Turbineneintrittstemperatur. Dadurch kann ein Betriebszustand eintreten, bei dem die Abgastemperatur einen maximal zulässigen Höchstwert überschreitet. Eine adäquate Reaktion darauf wäre es in diesem Teillastbetrieb die Turbineneintrittstemperatur abzusenken, damit die Abgastemperatur wieder gleich oder kleiner ihres maximal zulässigen Höchstwerts ist, womit allerdings nachteilig eine Absenkung des thermodynamischen Wirkungsgrads der Gasturbine einhergeht.

Der Sekundärluftverbrauch ist nach der GB 1 338 354 durch den Kühlluftverbrauch vorgegeben, welcher bei Nennlast erforderlich ist. Durch die Temperaturabsenkung bei Teillast kann dann ein Teil der Kühlluft eingespart werden. Der eingesparte Anteil wird dann als "jet flap air" an der Hinterkante der Leitschaufeln zur Umlenkungsbeeinflussung ausgeblasen. Eine Veränderung des Sekundärluftverbrauchs in Abhängigkeit des Betriebszustands ist in der GB 1 338 354 nicht vorgesehen. Nach der GB 938 247 kann jedoch eine Abschaltung der Kühlung der Turbinenleitschaufeln vorgesehen sein.

Aufgabe der Erfindung ist es ein Verfahren gemäß Anspruch 1 oder 9 zum Kühlen einer Turbinenstufe der Gasturbine zu schaffen, wobei die Gasturbine im Teillastbereich stabil bei einem hohen thermodynamischen Wirkungsgrad betreibbar ist.

Die Gasturbine mit einer Turbinenstufe weist eine von einem Kühlmedium gekühlt betreibbare Leitschaufel und eine Kühlmediumszuführeinrichtung zum Zuführen des Kühlmediums in das Innere der Leitschaufel auf, die im Bereich ihrer Hinterkante an der Druckseite mindestens eine Kühlmediumsaustrittsöffnung hat, durch die das Kühlmedium aus dem Inneren der Leitschaufel in die Hauptströmung ausströmbar ist, wobei die Kühlmediumszuführeinrichtung eine Massenstromsteuerungseinrichtung zum Steuern des Massenstroms durch die mindestens eine Kühlmediumsaustrittsöffnung aufweist, mit der der Massenstrom durch die mindestens eine Kühlmediumsaustrittsöffnung im Teillastbetrieb der Gasturbine verglichen mit dem Volllastbetrieb der Gasturbine vergrößerbar ist. Das erfindungsgemäße Verfahren zum Kühlen der Turbinenstufe der Gasturbine weist die Schritte auf: Betreiben der Gasturbine im Teillastbetrieb; Steuern der Massenstromsteuerungseinrichtung, dass der Massenstrom durch die mindestens eine Kühlmediumsaustrittsöffnung erhöht ist verglichen mit dem Massenstrom durch die mindestens eine Kühlmediumsaustrittsöffnung im Volllastbetrieb der Gasturbine.

Die von dem Kühlmedium gekühlt betriebbare Leitschaufel ist derart ausgelegt, dass sie im Volllastbetrieb unter Zufuhr eines entsprechend ausreichend großen Massenstroms von dem Kühlmedium im Auslegungspunkt mit ausreichend langer Lebensdauer betriebbar ist. Bei der Auslegung der Leitschaufel ist berücksichtigt, dass der Massenstrom von dem Kühlmedium so groß ist, dass durch die Kühlwirkung des Kühlmediums auf die Leitschaufel eine thermische Überbelastung der Leitschaufel unterbunden ist. Die Profilierung der Leitschaufel ist so gewählt, dass unter Berücksichtigung der Kühlwirkung durch das Kühlmedium und dessen aerodynamischen Einfluss die Leitschaufel im Auslegungspunkt definierte Auslegungsanforderungen erfüllt.

Durch das druckseitige Ausströmen des Kühlmediums durch die mindestens eine Kühlmediumsaustrittsöffnung im Bereich der Hinterkante der Leitschaufel ist die Umlenkwirkung der Leitschaufel verstärkt, verglichen mit der Umlenkwirkung der Leitschaufel bei geringerem oder keinem Ausströmen des Kühlmediums durch die mindestens eine Kühlmediumsaustrittsöffnung im Bereich der Hinterkante der Leitschaufel. Wird also mit Hilfe der Massenstromsteuerungseinrichtung beim Betrieb der Gasturbine der Massenstrom des Kühlmediums erhöht, das druckseitig aus der mindestens einen Kühlmediumsaustrittsöffnung ausströmt, wird als Folge davon die Umlenkwirkung der Leitschaufel verstärkt.

Die Erhöhung des Massenstroms des Kühlmediums wäre aus Hinsicht des notwendigen Kühlungseffekts durch das Kühlmedium nicht erforderlich. Die Erhöhung des Massenstroms des Kühlmediums bewirkt eine Verstärkung der Umlenkwirkung der Leitschaufel. Somit ist beim Betrieb der Leitschaufel bei erhöhtem Massenstrom des Kühlmediums, das druckseitig von der Leitschaufel im Bereich ihrer Hinterkante abströmt, der Umlenkwinkel der Leitschaufel durch eine entsprechende Wahl des Massenstrom des Kühlmediums einstellbar, obwohl die Leitschaufel von dem Kühlmedium ausreichend gekühlt betrieben ist.

Dies ist insbesondere Vorteilhaft im Teillastbetrieb der Gasturbine, bei dem die Umlenkwirkung der Leitschaufel nachteilig herabgesetzt ist. Dieser Herabsetzung kann vorteilhaft entgegengewirkt werden, indem mit der Massenstromsteuerungseinrichtung zum Steuern des Massenstroms durch die mindestens eine Kühlmediumsaustrittsöffnung der Massenstrom durch die mindestens eine Kühlmediumsaustrittsöffnung im Teillastbetrieb der Gasturbine verglichen mit dem Volllastbetrieb der Gasturbine vergrößert wird. Dadurch ist im Teillastbetrieb der Gasturbine die Umlenkwirkung der Leitschaufel vorteilhaft vergrößerbar, wobei die Leitschaufel dennoch in ausreichendem Maße gekühlt ist. Außerdem kann durch eine entsprechende Betätigung der Massenstromsteuerungseinrichtung der Massenstrom des Kühlmediums durch die mindestens eine Kühlmediumsaustrittsöffnung derart justiert werden, dass sich das Stufendruckverhältnis über die Leitschaufel und die Laufschaufel erhöht. Die Erhöhung des Stufendruckverhältnisses ermöglicht eine Erhöhung der Turbineneintrittstemperatur bei gleichbleibender Abgastemperatur, womit eine Erhöhung des thermodynamischen Wirkungsgrads und der spezifischen Leistung der Gasturbine einhergeht.

Bevorzugtermaßen weist die Massenstromsteuerungseinrichtung ein Drosselventil zur Massenstromsteuerung auf und die Leitschaufel ist im Volllastbetrieb für einen von dem Drosselventil angedrosselten Massenstrom des Kühlmediums ausgelegt. Außerdem ist es bevorzugt, dass die Leitschaufel im Teillastbetrieb für einen von dem Drosselventil ungedrosselten Massenstrom des Kühlmediums ausgelegt ist. Das Kühlmedium ist bevorzugt Verdichterendluft und die Massenstromsteuerungseinrichtung ist bevorzugt von dem Verdichterende mit der Verdichterendluft gespeist.

Die Verdichtendluft ist bevorzugt im Teillastbetrieb der Gasturbine an der Brennkammer vorbeigeführt. Die Verdichterendluft ist im Teillastbetrieb der Gasturbine an der Brennkammer beispielsweise deshalb vorbeigeführt, um beim Absenken der Turbineneintrittstemperatur ein zu starkes Abfallen der Flammtemperatur zu vermeiden und Verbrennungsinstabilitäten zu unterbinden. Die im Teillastbetrieb an der Brennkammer vorbeigeführte Verdichterendluft ist überschüssig und steht somit bevorzugt der Kühlmediumszuführeinrichtung zum Kühlen der Leitschaufel zur Verfügung.

Im Teillastbetrieb ist die Massenstromsteuerungseinrichtung bevorzugt ungedrosselt betrieben, wobei die an der Brennkammer vorbeigeführte Verdichterendluft zum Kühlen der Leitschaufel verwendet wird. Wird hingegen die Gasturbine bei Volllast betrieben, so ist das Drosselventil der Massenstromsteuerungseinrichtung angedrosselt, wodurch der Massenstrom des Kühlmediums reduziert ist. Diese Reduzierung des Massenstroms des Kühlmediums ist bevorzugt so zu wählen, dass stets sowohl eine ausreichende Kühlung als auch eine ausreichende Umlenkwirkung der Leitschaufel beim Betrieb der Gasturbine gegeben sind.

Die Leitschaufel weist bevorzugt einen Kühlmediumseintritt, durch die das Kühlmedium in das Innere der Leitschaufel einströmbar ist, und ein Kühlmediumsreservoir auf, mit dem am Kühlmediumseintritt das Kühlmedium von der Massenstromsteuerungseinrichtung bereitgestellt ist. Das Kühlmediumsreservoir wird vorteilhaft als ein Pufferbehälter für das Kühlmedium bereitgestellt, so dass von dem Kühlmediumsreservoir insbesondere ein starker instationärer Bedarf an dem Kühlmedium von der Leitschaufel kompensierbar ist. Außerdem ist in dem Kühlmediumsreservoir das Niveau der Strömungsgeschwindigkeiten niedrig, so dass in dem Kühlmediumsreservoir Strömungsverluste gering sind.

Bevorzugtermaßen ist die Massenstromsteuerungseinrichtung von einem Verdichterplenum der Gasturbine gespeist. In das Verdichterplenum ist insbesondere der Anteil der Verdichterendluft geleitet, der im Teillastbetrieb der Gasturbine an der Brennkammer vorbeigeführt ist. Außerdem herrscht im Verdichterplenum der Verdichterenddruck, so dass in dem Verdichterplenum das Kühlmedium mit einem ausreichend hohem Druck zum entsprechenden Drosseln bevorzugt mit dem Drosselventil bereitgestellt ist.

Die gekühlte Leitschaufel ist bevorzugt die erste, unmittelbar stromab der Brennkammer der Gasturbine angeordnete Leitschaufel der ersten Turbinenstufe der Gasturbine. Außerdem ist es gemäß dem erfindungsgemäßen Verfahren bevorzugt, dass der Massenstrom derart eingestellt wird, dass der Teilbetrieb der Gasturbine in Bezug auf den thermodynamischen Wirkungsgrad und/oder den Anströmwinkel der stromab der Leitschaufel angeordneten Laufschaufel und/oder die Abgastemperatur der Turbine der Gasturbine und/oder die Flammstabilität in der Brennkammer der Gasturbine optimiert ist.

Bekanntermaßen nehmen mit sinkender Gasturbinenlast auch der absolute Wert des Verdichtermassenstroms und die absoluten Werte der Sekundärmassenströme ab. Um dann dennoch eine höheren Kühlluftverbrauch im Teillastbetrieb herbeizuführen, ist mit Absenken der Gasturbinenlast die Anhebung des prozentualen Werts des Kühlmediums-Massenstroms - bezogen auf den Verdichteransaugmassenstrom - vorgesehen. Dies erhöht den relativen Verbrauch an Kühlmedium im Teillastbetrieb, verglichen mit dem Volllastbetrieb.

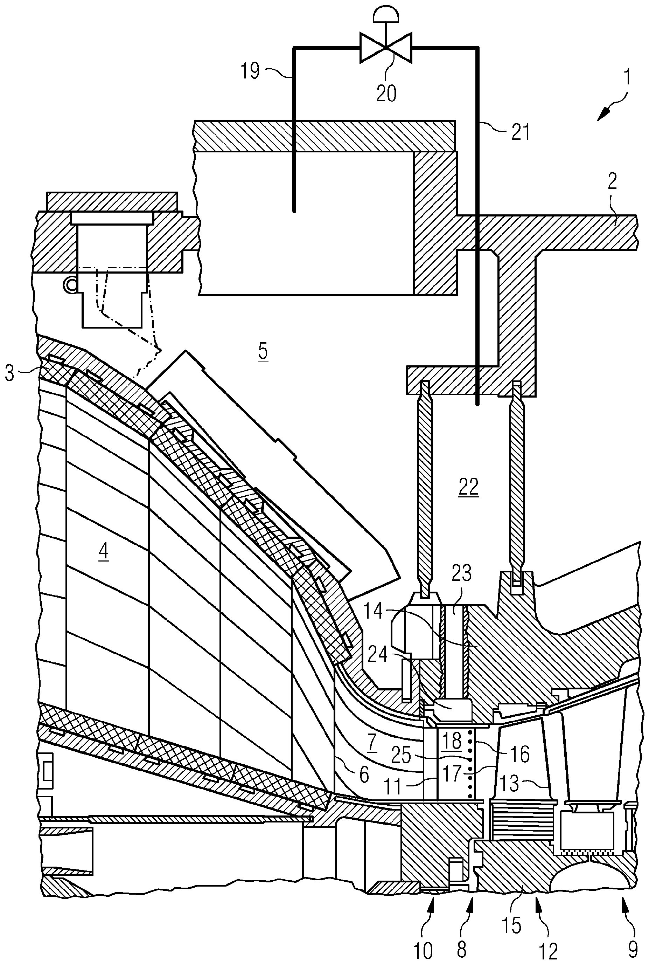

Im Folgenden wird anhand der beigefügten schematischen Zeichnung die Erfindung näher erläutert. Es zeigt die Figur einen Längsschnitt durch eine erfindungsgemäße Ausführungsform der Gasturbine im Bereich der Brennkammer und der Turbine.

Wie es aus der Figur ersichtlich ist, weist eine Gasturbine 1 ein Gehäuse 2 auf, in dem ein Verdichter (nicht gezeigt), eine Brennkammer 3 und eine Turbine angeordnet sind, die mehrere Turbinenstufen 8, 9 aufweist. Stromab des Verdichterendes ist ein Umlenkdiffusor (nicht gezeigt) angeordnet, der in einen als ein Hohlraum in dem Gehäuse 3 ausgebildetes Verdichterplenum 5 mündet, in dem die Brennkammer 3 angeordnet ist. Beim Betrieb der Gasturbine 1 wird von dem Verdichter Umgebungsluft angesaugt und auf einen Verdichterenddruck verdichtet. Von dem Verdichterende tritt die Verdichterendluft in den Brennkammerinnenraum 4 der Brennkammer 3 ein und wird mit einem flüssigen oder gasförmigen Brennstoff vermischt. Dadurch entsteht im Brennkammerinnenraum 4 ein brennbares Gemisch, das gezündet und in der Brennkammer 3 verbrannt wird. Die Verbrennung in dem Brennkammerinnenraum 4 erfolgt im Wesentlichen isobar. Am Brennkammeraustritt 6 der Brennkammer 3 hat das Gemisch eine durch die Verbrennung entsprechend bewirkte hohe Temperatur und wird via einen Übergangskanal 7 zu der Turbine der Gasturbine 1 geführt.

Von der Turbine sind in der Figur eine erste Turbinenstufe 8 und eine zweite Turbinenstufe 9 dargestellt. Jede Turbinenstufe 8, 9 weist eine Leitschaufelreihe 10 und eine Laufschaufelreihe 12 auf. Die Leitschaufelreihe 10 der ersten Turbinenstufe 8 ist gebildet von einer Mehrzahl an über den Umfang äquidistant angeordneten, gleichen Leitschaufeln 11. Die Laufschaufelreihe 12 der ersten Turbinenstufe 8 ist gebildet von einer äquidistant über dem Umfang angeordneten, gleichen Laufschaufeln 13. Die Leitschaufeln 11 und die Laufschaufeln 13 sind in Axialbausweise ausgeführt. Die Leitschaufeln 11 sind an ihren radial außenliegenden Enden von einem Leitschaufelträger 14 gehalten. Die Laufschaufeln 13 sind an ihren radial innenliegenden Enden jeweils mit einem Schaufelfuß ausgestattet, der mit einem Rotor 15 der Gasturbine 1 formschlüssig in Eingriff steht. Jede Leitschaufel 11 weist ein Schaufelblatt mit einer Hinterkante 16, einer Vorderkante sowie einer Saugseite (nicht gezeigt) und einer Druckseite 18 auf. Im Bereich der Vorderkanten der Leitschaufeln 11 tritt das in dem Übergangskanal 7 herangeführte Heißgasgemisch in die erste Turbinenstufe 8 ein, wobei von der Leitschaufelreihe 10 das Heißgasgemisch umgelenkt wird und in der Laufschaufelreihe 12 unter Abgabe von Arbeit entspannt wird.

Je höher die Turbineneintrittstemperatur des Heißgasgemischs ist, desto höher ist der thermodynamische Wirkungsgrad der Gasturbine 1. Thermische Belastungsgrenzen des Werkstoffs der Leitschaufeln 11 ergeben eine maximal zulässige Turbineneintrittstemperatur. Zur Erhöhung der maximal zulässigen Turbineneintrittstemperatur werden die Leitschaufeln 11 beim Betrieb der Gasturbine 1 gekühlt, um die thermische Belastung der Leitschaufeln 11 herabzusetzen. Hierfür sind die Leitschaufeln 11 hohl ausgeführt, wobei die Leitschaufeln 11 von einem Kühlmedium zum Kühlen durchströmt werden.

Die Gasturbine weist als eine Kühlmediumszuführeinrichtung eine Abzapfleitung 19, ein Drosselventil 20, eine Zuführleitung 21, ein Kühlluftreservoir 22, einen Kühllufteintritt 23 und eine Kammer 24 auf, wobei das Drosselventil 20 als Massenstromsteuerungseinrichtung ausgeführt ist. Die Abzapfleitung 19 ist an das Verdichterplenum 5 fluidleitend angeschlossen und geht via das Drosselventil 20 in die Zuführleitung 21 über. Die Zuführleitung 21 mündet in das Kühlluftreservoir 22, das radial außerhalb des Leitschaufelkranzes 10 angeordnet ist und als ein Ringraum ausgebildet ist. Unmittelbar radial außenseitig der Leitschaufeln 11 und konzentrisch zum Kühlluftreservoir 24 ist die Kammer 24 angeordnet, die in die Innenräume der Leitschaufeln 11 mündet. Der Radialabstand zwischen der Kammer 24 und dem Kühllustreservoir 22 ist für jede Leitschaufel 11 mit dem Kühllufteintritt 23 überbrückt.

Die Verdichterendluft strömt von dem Verdichterende via den Umlenkdiffusor in das Verdichterplenum 5, in dem die Verdichterluft als das Kühlmedium (Kühlluft) bereitgestellt ist. Von dem Verdichterplenum 5 wird die Kühlluft mit der Abzapfleitung 19 abgezapft. Je nach Androsselung des Drosselventils 20 ergibt sich ein entsprechender Kühlluftmassenstrom in der Abzapfleitung 19 und der Zuführleitung 21. Von der Zuführleitung 21 strömt die Kühlluft in das Kuhlluftreservoir 22 und wird in dem Kühlluftreservoir 22 bereitgestellt. Der Druck der Kühlluft in dem Kühlluftreservoir 22 ergibt sich insbesondere aus dem Kühlluftmassenstrom, der durch den Kühllufteintritt 23 aus dem Kühlluftreservoir 22 abströmt, dem Kühlluftmassenstrom, der durch die Zuführleitung 21 in das Kühlluftreservoir 22 zuströmt, und der Androsselstellung des Drosselventils 20. Von dem Kühlluftreservoir 22 strömt die Kühlluft via den Kühllufteintritt 23 in die Kammer 24, von wo aus die Kühlluft in die Innenräume der Leitschaufeln 11 strömt. Die Leitschaufeln 11 weisen im Bereich ihrer Hinterkanten 16 an ihren Druckseiten 18 jeweils eine im Wesentlichen radial verlaufende Reihe an Kühlluftaustrittsöffnungen 25 auf, durch die die Kühlluft aus dem Inneren der Leitschaufeln 11 in die Hauptströmung ausströmt.

Die Querschnitte der Abzapfleitung 19, der Zuführleitung 21 und des Kühllufteintritts 23 sind so dimensioniert, dass die Leitschaufel 11 im Volllastbetrieb der Gasturbine 1 mit einem derart hohen Kühlluftmassenstrom versorgt werden, dass, wenn das Drosselventil 20 eine bestimmte Androsselstellung hat, eine ausreichende Kühlung der Leitschaufeln 11 gegeben ist. Dabei stellt sich der Abströmwinkel an den Leitschaufeln 11 so ein, dass die Laufschaufeln 13 an ihren Vorderkanten 17 mit einem Zuströmwinkel angeströmt werden, der dem Auslegungszuströmwinkel entspricht. Bei der Auslegung der Leitschaufel 11 ist berücksichtigt, dass der Massenstrom von der Kühlluft so ausreichend groß ist, dass durch die Kühlwirkung der Kühlluft auf die Leitschaufeln 11 eine thermische Überbeanspruchung der Leitschaufel 11 unterbunden ist und dennoch die Laufschaufeln 13 optimal angeströmt werden.

Durch das druckseitige Ausströmen der Kühlluft durch die Kühlluftaustrittsöffnung 25 im Bereich der Hinterkanten 16 der Leitschaufeln 11 ist die Umlenkwirkung der Leitschaufeln 11 verstärkt. Somit wird im Teillastbetrieb der Gasturbine 11 das im Volllastbetrieb angedrosselte Drosselventil 20 geöffnet, wodurch sich der Massenstrom der Kühlluft durch die Kühlluftaustrittsöffnungen 25 erhöht. Als Folge hiervon erhöht sich die Umlenkwirkung der Leitschaufeln 11.

Hinsichtlich des notwendigen Kühlungseffekts durch die Kühlluft wäre eine derartige Erhöhung des Massenstroms der Kühlluft nicht erforderlich. Die Erhöhung des Massenstroms der Kühlluft bewirkt zusätzlich eine Verstärkung der Umlenkwirkung der Leitschaufel 11, wodurch der Umlenkwinkel der Leitschaufeln 11 durch eine entsprechende Wahl des Massenstroms der Kühlluft unter Betätigung des Drosselventils 20 eingestellt werden kann.

Im Teillastbetrieb der Gasturbine, bei dem die Umlenkwirkung der Leitschaufeln 11 nachteilig herabgesetzt ist, wird das Drosselventil 20 geöffnet, im Extremfall vollständig geöffnet, wodurch der Massenstrom durch die Kühlluftaustrittsöffnungen 25 vergrößert wird. Dadurch wird im Teillastbetrieb der Gasturbine 1 die Umlenkwirkung der Leitschaufeln 11 vorteilhaft vergrößert, wobei die Vorderkanten 17 der Leitschaufeln 13 optimal angeströmt und die Leitschaufeln 11 ausreichend gekühlt werden.

Im Teillastbetrieb der Gasturbine 1 steht im Verdichterplenum 5 eine größere Menge an der Verdichterluft zur Verfügung als im Volllastbetrieb, da im Teillastbetrieb an der Brennkammer 3 Verdichterendluft vorbeigeführt wird, um beim Absenken der Turbineneintrittstemperatur ein zu starkes Abfallen der Flammtemperatur zu vermeiden und Verbrennungsinstabilitäten zu unterbinden. Diese überschüssige Verdichterendluft steht vorteilhaft zum Zuführen zu den Leitschaufeln 11 zur Verfügung. Im extremen Teillastbetrieb der Gasturbine 1 ist das Drosselventil 20 ungedrosselt gestellt, so dass der höchste Kühlluftmassenstrom den Leitschaufeln 11 zugeführt wird. Wird hingegen die Gasturbine 1 bei Volllast betrieben, so ist das Drosselventil 20 angedrosselt, wodurch der Massenstrom der Kühlluft reduziert ist. Diese Reduzierung des Massenstroms der Kühlluft ist so zu wählen, dass stets sowohl eine ausreichende Kühlung als auch eine ausreichende Umlenkwirkung der Leitschaufeln 11 beim Betrieb der Gasturbine 1 bewirkt werden.

Das Kühlluftreservoir 22 wirkt als ein Pufferbehälter für die Kühlluft, so dass von dem Kühlluftreservoir 22 ein stark instationärer Bedarf an der Kühlluft beim Betrieb der Gasturbine 1 kompensiert werden kann. Außerdem ist die Größe des Volumens des Kühlluftreservoirs so gewählt, dass das Niveau der Strömungsgeschwindigkeiten in dem des Kühlluftreservoir niedrig sind.

## Patentansprüche

1. Verfahren zum Kühlen einer mehrere Leitschaufeln (11) aufweisenden Turbinenstufe (8) einer Gasturbine (1), deren Leitschaufeln (11) von einem Kühlmedium gekühlt betreibbar sind und die eine Kühlmediumszuführeinrichtung (19 bis 24) zum Zuführen des Kühlmediums in das Innere der Leitschaufeln (11) aufweist, wobei die Leitschaufeln (1) im Bereich ihrer Hinterkante (16) an ihrer Druckseite (18) mindestens eine Kühlmediumsaustrittsöffnung (25) hat, durch die das Kühlmedium aus dem Inneren der Leitschaufeln (11) in die Hauptströmung ausströmbar ist,
wobei die Kühlmediumszuführeinrichtung (19 bis 24) eine Massenstromsteuerungseinrichtung (20) zum Steuern des Massenstroms durch die mindestens eine Kühlmediumsaustrittsöffnung (25) aufweist,
mit den Schritten:
- Betreiben der Gasturbine (1) im Teillastbetrieb;
- Steuern der Massenstromsteuerungseinrichtung (20), dass der Massenstrom durch die mindestens eine Kühlmediumsaustrittsöffnung (25) erhöht ist verglichen mit dem Massenstrom durch die mindestens eine Kühlmediumsaustrittsöffnung (25) im Volllastbetrieb der Gasturbine (1),
wobei die Massenstromsteuerungseinrichtung ein Drosselventil (20) zur Massenstromsteuerung aufweist und die Leitschaufel (11) im Volllastbetrieb für einen von dem Drosselventil (20) angedrosselten Massenstrom des Kühlmediums ausgelegt ist.

2. Verfahren gemäß Anspruch 1,
wobei die Leitschaufel (11) im Teillastbetrieb für einen von dem Drosselventil (20) ungedrosselten Massenstrom des Kühlmediums ausgelegt ist.

3. Verfahren gemäß einem Anspruch 1 oder 2,
wobei das Kühlmedium Verdichterendluft und die Massenstromsteuerungseinrichtung (20) von dem Verdichterende mit der Verdichterendluft gespeist ist.

4. Verfahren gemäß Anspruch 3,
wobei die Verdichterendluft im Teillastbetrieb der Gasturbine (1) an deren Brennkammer (3) vorbeigeführt ist.

5. Verfahren gemäß einem der Ansprüche 1 bis 4,
wobei die Leitschaufel (11) einen Kühlmediumseintritt (23), durch die das Kühlmedium in das Innere der Leitschaufel (11) einströmbar ist, und ein Kühlmediumsreservoir (22) aufweist, mit dem am Kühlmediumseintritt (23) das Kühlmedium von der Massenstromsteuerungseinrichtung (20) bereitgestellt ist.

6. Verfahren gemäß einem der Ansprüche 1 bis 5,
wobei die Massenstromsteuerungseinrichtung (20) von dem Verdichterplenum (5) der Gasturbine (1) gespeist ist.

7. Verfahren gemäß einem der Ansprüche 1 bis 6,
wobei die Leitschaufel die erste, unmittelbar stromab der Brennkammer (3) der Gasturbine (1) angeordnete Leitschaufel (11) der ersten Turbinenstufe (8) der Gasturbine (1) ist.

8. Verfahren gemäß einem der Ansprüche 1bis 7,
wobei der Massenstrom derart eingestellt wird, dass der Teillastbetrieb der Gasturbine (1) in Bezug auf den thermodynamischen Wirkungsgrad und/oder den Anströmwinkel der stromab der Leitschaufel (11) angeordneten Laufschaufel (13) und/oder die Abgastemperatur der Turbine der Gasturbine (1) und/oder die Flammstabilität in der Brennkammer (3) der Gasturbine (1) optimiert ist.

9. Verfahren zum Betrieb einer Gasturbine mit einer Turbinenstufe (8), die eine Vielzahl von mit einem Kühlmedium gekühlten Leitschaufel (11) aufweist und mit einer Kühlmediumszuführeinrichtung (19 bis 24) zum Zuführen des Kühlmediums in das Innere der Leitschaufeln (11), die in ihrer Außenfläche mehrere Kühlmediumsaustrittsöffnungen (25) aufweist, durch die das Kühlmedium aus dem Inneren der Leitschaufel (11) in die Hauptströmung ausströmbar ist, wobei die Kühlmediumszuführeinrichtung (19 bis 24) eine Massenstromsteuerungseinrichtung (20) zum Steuern des Massenstroms durch die Kühlmediumsaustrittsöffnungen (25) aufweist, derart, dass während des Betriebs der Kühlmedium-Massenstrom einen prozentualen Wert - bezogen auf einen Verdichteransaugmassenstroms - aufweist,
**gekennzeichnet durch** den Verfahrensschritt, dass mit Reduzierung der Gasturbinenleistung der prozentuale Wert erhöht wird.

## Claims

1. Method for cooling a turbine stage (8), which has multiple guide blades (11), of a gas turbine (1), the guide blades (11) of which are operable with cooling by a cooling medium and which has a cooling medium supply device (19 to 24) for supplying the cooling medium into the interior of the guide blades (11), wherein the guide blades (1) have, in the region of their trailing edge (16) and on their pressure side (18), at least one cooling medium outlet opening (25) through which the cooling medium can be caused to flow out of the interior of the guide blades (11) into the main flow,
wherein the cooling medium supply device (19 to 24) has a mass flow control device (20) for controlling the mass flow through the at least one cooling medium outlet opening (25),
having the steps:
- operating the gas turbine (1) at part load;
- controlling the mass flow control device (20) such that the mass flow through the at least one cooling medium outlet opening (25) is increased in relation to the mass flow through the at least one cooling medium outlet opening (25) in full-load operation of the gas turbine (1),
wherein the mass flow control device has a throttle valve (20) for mass flow control, and the guide blade (11) is designed, in full-load operation, for a mass flow of the cooling medium which is throttled by the throttle valve (20).

2. Method according to Claim 1,
wherein the guide blade (11) is designed, in part-load operation, for a mass flow of the cooling medium which is not throttled by the throttle valve (20).

3. Method either of Claims 1 and 2,
wherein the cooling medium is compressor exit air and the mass flow control device (20) is fed with the compressor exit air from the compressor exit.

4. Method according to Claim 3,
wherein, in part-load operation of the gas turbine (1), the compressor exit air is conducted so as to bypass the combustion chamber (3) of said gas turbine.

5. Method according to one of Claims 1 to 4,
wherein the guide blade (11) has a cooling medium inlet (23), through which the cooling medium can be caused to flow into the interior of the guide blade (11), and a cooling medium reservoir (22), by means of which the cooling medium is provided to the cooling medium inlet (23) by the mass flow control device (20).

6. Method according to one of Claims 1 to 5,
wherein the mass flow control device (20) is fed from the compressor plenum (5) of the gas turbine (1).

7. Method according to one of Claims 1 to 6,
wherein the guide blade is the first guide blade (11), arranged immediately downstream of the combustion chamber (3) of the gas turbine (1), of the first turbine stage (8) of the gas turbine (1).

8. Method according to one of Claims 1 to 7,
wherein the mass flow is set such that the part-load operation of the gas turbine (1) is optimized with regard to the thermodynamic efficiency and/or with regard to the flow impingement angle on the rotor blade (13) arranged downstream of the guide blade (11) and/or with regard to the exhaust-gas temperature of the turbine of the gas turbine (1) and/or with regard to the flame stability in the combustion chamber (3) of the gas turbine (1).

9. Method for operating a gas turbine having a turbine stage (8), which has a multiplicity of guide blades (11) which are cooled by means of a cooling medium, and having a cooling medium supply device (19 to 24) for supplying the cooling medium into the interior of the guide blades (11), which guide blade has, in its outer surface, multiple cooling medium outlet openings (25) through which the cooling medium can be caused to flow out of the interior of the guide blade (11) into the main flow,
wherein the cooling medium supply device (19 to 24) has a mass flow control device (20) for controlling the mass flow through the cooling medium outlet openings (25), such that, during operation, the cooling medium mass flow has a percentage value in relation to a compressor intake mass flow, **characterized by** the method step that, with a reduction in gas turbine power, the percentage value is increased.

## Revendications

1. Procédé de refroidissement d'un étage (8) de turbine, ayant plusieurs aubes (11) directrices, d'une turbine (1) à gaz, dont les aubes (11) directrices peuvent fonctionner en étant refroidies par un fluide de refroidissement et qui a un dispositif (19 à 24) d'apport de fluide de refroidissement, pour apporter du fluide de refroidissement à l'intérieur des aubes (11) directrices, l'aube (11) directrice ayant, dans la région de son bord (16) arrière sur son intrados (18) au moins une ouverture (25) de sortie du fluide de refroidissement, par lequel le fluide de refroidissement peut sortir de l'intérieur des aubes (11) directrices à l'écoulement principal,
le dispositif (19 à 24) d'apport de fluide de refroidissement ayant un dispositif (20) de réglage de courant massique pour régler le courant massique dans la au moins une ouverture (25) de sortie du fluide de refroidissement,
comprenant les stades :
- on fait fonctionner la turbine (1) à gaz en fonctionnement en charge partielle ;
- on commande le dispositif (20) de réglage du courant massique de manière à augmenter le courant massique dans la au moins une ouverture (25) de sortie du fluide de refroidissement par rapport au courant massique dans la au moins une ouverture (25) de sortie du fluide de refroidissement en fonctionnement en pleine charge de la turbine (1) à gaz,
le dispositif de commande de courant massique ayant une soupape (20) d'étranglement pour le réglage du courant massique et l'aube (11) directrice étant conçue, en fonctionnement en pleine charge, pour un courant massique du fluide de refroidissement étranglé par la soupape (20) d'étranglement.

2. Procédé suivant la revendication 1,
dans lequel l'aube (11) directrice est conçue, en fonctionnement en charge partielle, pour un courant massique du fluide de refroidissement non étranglé par la soupape (20) d'étranglement.

3. Procédé suivant l'une des revendications 1 ou 2,
dans lequel le fluide de refroidissement est de l'air de compresseur et le dispositif (20) de commande de courant massique est alimenté en air final de compresseur par la fin du compresseur.

4. Procédé suivant la revendication 3,
dans lequel l'air final du compresseur passe, en fonctionnement en charge partielle de la turbine (1) à gaz, devant sa chambre de combustion (3).

5. Procédé suivant l'une des revendications 1 ou 4,
dans lequel l'aube (11) directrice a une entrée (13) de fluide de refroidissement, par laquelle le fluide de refroidissement peut entrer à l'intérieur de l'aube (11) directrice, et un réservoir (22) de fluide de refroidissement par lequel le fluide de refroidissement, à l'entrée (23) du fluide de refroidissement, peut être mis à disposition du dispositif (20) de réglage du courant massique.

6. Procédé suivant l'une des revendications 1 ou 5,
dans lequel le dispositif (20) de réglage du courant massique est alimenté par le plenum (5) du compresseur de la turbine (1) à gaz.

7. Procédé suivant l'une des revendications 1 ou 6,
dans lequel l'aube directrice est la première aube (11) directrice, montée directement en aval de la chambre de combustion (3) de la turbine (1) à gaz, du premier étage (8) de la turbine (1) à gaz.

8. Procédé suivant l'une des revendications 1 ou 7,
dans lequel on règle le courant massique de manière à optimiser le fonctionnement en charge partielle de la turbine (1) à gaz en ce qui concerne le rendement thermodynamique et/ou l'angle d'attaque de l'aube (13) directrice montée en aval de l'aube (11) directrice et/ou la température des gaz d'échappement de la turbine (1) à gaz et/ou la stabilité à la flamme dans la chambre de combustion (3) de la turbine (1) à gaz.

9. Procédé pour faire fonctionner une turbine à gaz ayant un étage (8) de turbine, qui a une pluralité d'aubes (11) directrices refroidies par un fluide de refroidissement et comprenant un dispositif (19 à 24) d'apport de fluide de refroidissement pour apporter le fluide de refroidissement à l'intérieur des aubes (11) directrices, qui a, dans sa surface extérieure, plusieurs ouvertures (25) de sortie du fluide de refroidissement par lesquelles le fluide de refroidissement peut sortir de l'intérieur de l'aube (11) directrice à l'écoulement principal,
dans lequel le dispositif (19 à 24) d'apport de fluide de refroidissement a un dispositif (20) de réglage de courant massique pour régler le courant massique dans les ouvertures (25) de sortie du fluide de refroidissement, de manière à ce que, pendant le fonctionnement, le courant massique du fluide de refroidissement ait une valeur en pourcentage - rapportée à un courant massique d'aspiration du compresseur - **caractérisé par** le stade de procédé suivant lequel on augmente la valeur en pourcentage au fur et à mesure que se réduit la puissance de la turbine à gaz.
